(19) Europäisches Patentamt
European Patent Office
Office européen des brevets

(11) EP 0 437 934 B1

(12) EUROPEAN PATENT SPECIFICATION

(45) Date of publication and mention of the grant of the patent: **22.01.1997 Bulletin 1997/04**

(51) Int. Cl.$^6$: **C04B 35/56**, C04B 35/565

(21) Application number: **90313011.0**

(22) Date of filing: **29.11.1990**

# (54) High density silicon carbide sintered bodies from borosiloxanes

Aus Borosiloxanen hergestellte Siliciumkarbid-Sinterkörper hoher Dichte

Corps frittés en carbure de silicium ayant une densité élevée préparés à partir de borosiloxanes

(84) Designated Contracting States:
**BE DE ES FR GB IT NL**

(30) Priority: **28.12.1989 US 458204**

(43) Date of publication of application:
**24.07.1991 Bulletin 1991/30**

(73) Proprietor: **DOW CORNING CORPORATION**
**Midland Michigan 48686-0994 (US)**

(72) Inventors:
- **Burns, Gary Thomas**
  **Midland, Michigan (US)**
- **Zank, Gregg Alan**
  **Midland, Michigan (US)**

(74) Representative: **Laredo, Jack Joseph et al**
**Elkington and Fife,**
**Prospect House,**
**8 Pembroke Road**
**Sevenoaks, Kent TN13 1XR (GB)**

(56) References cited:
**EP-A- 0 148 277**
**EP-A- 0 292 579**
**EP-A- 0 361 736**
**FR-A- 2 190 764**
**GB-A- 2 002 738**
**GB-A- 2 015 498**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 437 934 B1

## Description

This invention relates to the preparation of highly densified ceramic bodies by the pyrolysis of a mixture comprising a preceramic borosiloxane, silicon carbide powder, a curing agent for the borosiloxane and, optionally, a crosslinking agent for the borosiloxane but without additional sintering aids. Such highly densified ceramic bodies can be prepared by sintering under pressure or by utilizing a pressureless process.

This invention also relates to novel mixtures comprising a preceramic borosiloxane, silicon carbide powder, a curing agent for the borosiloxane and, optionally, a crosslinking agent for the borosiloxane, but without additional sintering aids. These mixtures can be formed into desired shapes and then sintered to form ceramic, shaped bodies with high densities (above 2.4 g/cm$^3$).

EP-A-0 361 736 and corresponding US-A-4888376 (Atwell et al.) describe uniform mixtures for preparing handleable green bodies containing silicon carbide from which sintered silicon carbide bodies can be formed, methods of forming such handleable green bodies and methods of preparing the sintered silicon carbide bodies from the, handleable green bodies. The starting mixtures comprise silicon carbide powder, a preceramic organopolysiloxane, a metal-containing sintering aid and an organopolysiloxane curing agent. The metal-containing sintering aid is present in the mixture in a proportion of from 0.1 to 3 weight percent of the metal based on the weight of silicon carbide powder. The organopolysiloxane curing agent is present in an effective amount to cure the preceramic organopolysiloxane, and the preceramic organopolysiloxane is present at such a level that the free carbon value of the mixture, which is the amount of free or excess carbon derived from the organopolysiloxane during pyrolysis expressed as a weight percentage based on the total weight of the silicon carbide powder and the char derived from the organopolysiloxane, is greater than 0.2 weight percent based on the total weight of the silicon carbide powder and the char derived from the preceramic organopolysiloxane. The intimate mixture comprising the said components is formed into a desired shape under pressure at a temperature below 500°C in order to obtain said handleable green body. In order to obtain said sintered body of silicon carbide with a density greater than 2.4 g/cm$^3$, the handleable green body is sintered in an inert atmosphere at a temperature above 1900°C.

In contrast to the latter disclosure (EP-A-0361736 and US-A-4888376), the present invention does not require additional metal-containing sintering aids. The invention is based on the particular choice for said organopolysiloxane of a borosiloxane, the amount in which said borosiloxane is included in said intimate mixture being such that boron is provided thereby in the amount needed as a sintering aid. The present inventors have found that, with a mixture in accordance with the invention, which does not contain additional metal-containing sintering aids, shaping under pressure at a temperature below 500°C yields a handleable green body with a green strength of 3.45 MPa (500 Psi) or above and that the sintering of said handleable green body at a temperature above 1900°C still yields a sintered body with a density greater than 2.4 g/cm$^3$.

EP-A-0 148 277 relates to a process for producing a silicon carbide sintered product, in which the generation of feathers and the occurrence of irregular grain growth are inhibited without hindering densification and without degradation in grain bonding, having the feature of utilizing an organic silicon polymer in the production of the silicon carbide sintered product. The starting mixture of this process comprises powdered silicon carbide, a sintering promoting agent and an organic silicon polymer whose main skeleton is mainly composed of silicon and carbon and optionally an organic binder. The molded mixture is sintered in an inert atmosphere at a temperature within the range of 2,050°C to 2,350°C. The sintering promoting agent may be carbon and aluminium and/or aluminium nitride, the content of aluminium and aluminium nitride being from 0.5 to 5 parts by weight calculated as aluminium based on 100 parts by weight of the total silicon carbide content. When the sintering promoting agent is carbon and aluminium and/or aluminium nitride, the organic silicon polymer may be prepared by adding, mixing and polymerizing a polyborosiloxane, which has a skeleton of B, Si and O and has a phenyl group at least on a part of the side-chains of the Si atom, with a polysilane. When the sintering promoting agent is carbon and boron and/or boron nitride, the organic silicon polymer may be prepared by adding, mixing and polymerizing an aluminum halide anhydride with a polysilane.

EP-A-0 292 579 is similar in its objects to EP-A-0 148 277 just discussed, but achieves its purpose by using a combination of aluminium and boron and an organic silicon polymer in a particular way. The starting mixture of the process comprises silicon carbide powder, one or more sintering-promoting agents, an organic silicon polymer whose main skeleton is composed of silicon and carbon and, optionally, an organic binder. The process is characterised in that both aluminium and boron are incorporated in to the molded mixture to be sintered but only one of these is added as the element or its nitride, the other being added in a form incorporated into an organic silicon polymer. The sintering promoting agent may be aluminium and/or aluminium nitride, and the organic silicon polymer may be prepared by adding, mixing and polymerizing (a) a polyborosiloxane which has a skeleton of boron, silicon and oxygen and has a phenyl group at least on a part of the side chains bonded to silicon with (b) a polysilane. Alternatively, the sintering-promoting agent may be boron and/or boron nitride, and the organic silicon polymer may be obtained by adding, mixing and polymerizing an anhydrous aluminium halide with a polysilane. Sintering of the molded mixture is again effected in an inert gas atmosphere at a temperature in the range of from 2,050°C to 2,350°C.

GB-A-2,015,498 A describes a process for producing a heat-resistant ceramic sintered body, which comprises preparing polycarbosilane partly containing siloxane bonds by adding 0.01 to 15% by weight of polyborosiloxane containing phenyl groups in at least a part of the side chains of Si and having a skeletal structure composed of B, Si and O to a polysilane having the structure

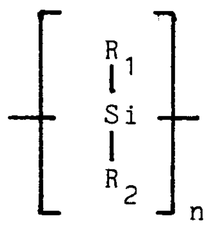

wherein n is at least 3, and $R_1$ and $R_2$, independently from each other, represent methyl, ethyl, phenyl or hydrogen, and heating the polymer mixture in an atmosphere insert to the reaction thereby polymerizing it; mixing said polycarbosilane with a ceramic powder composed of at least one member selected from the group consisting of oxides, carbides, nitrides, borides and silicides, shaping the resulting mixture; and simultaneously with, or after, the shaping of the mixture, sintering the mixture at a temperature of from 800°C to 2,000°C in vacuum or in an atmosphere composed of at least one gas selected from the group consisting of inert gases, carbon monoxide gas, carbon dioxide gas, hydrogen gas, nitrogen gas and hydrocarbon gases.

The products and processes of the present invention have several distinct advantages over prior art methods. First, the green bodies have high strengths, thus, facilitating handling and machining before sintering. Second, the use of a preceramic borosiloxane in the required amount eliminates the need to include additional sintering aids (e.g. boron or aluminum) and additional carbon sources into the preceramic mixture, since the required amounts of both boron and carbon are incorporated into the polymeric structure of said borosiloxane. Finally, the composition of the preceramic mixture can be varied to accommodate various molding techniques such as press and sintering or transfer/injection molding and sinter applications.

The present application discloses for the first time that high density, high strength ceramic products may unexpectedly be obtained by sintering a mixture comprising a preceramic borosiloxane, silicon carbide powder, a curing agent for the borosiloxane and, optionally, an additional crosslinking agent for the borosiloxane, but excluding additional sintering aids.

The present invention relates to a method of preparing a sintered body of silicon carbide with a density greater than 2.4 g/cm$^3$, said method comprising:

(a) blending to a uniform mixture components comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that: (i) the amount of boron in the mixture is 0.08-3 weight percent, based on the total weight of the silicon carbide powder and the char derived from the curable preceramic borosiloxane polymer, and (ii) the amount of free or excess carbon in the mixture which is derived from the borosiloxane polymer during pyrolysis, expressed as a weight percentage based on the total weight of the silicon carbide powder and the char derived from the curable preceramic borosiloxane polymer, is greater than 0.1 weight percent;
(b) forming the uniform mixture into a desired shape under pressure at a temperature below 500°C. to obtain a handleable green body; and
(c) sintering the handleable green body in an inert atmosphere at a temperature greater than 1900°C. to obtain said sintered body of silicon carbide with a density greater than 2.4 g/cm$^3$.

The present invention also relates to a method of forming a handleable green body with a green strength of 3.45 MPa (500 psi) or above comprising:

(a) blending to a uniform mixture components comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent

free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that: (i) the amount of boron in the mixture is 0.08-3 weight percent, based on the total weight of the silicon carbide powder and the char derived from the preceramic borosiloxane polymer, and (ii) the amount of free or excess carbon in the mixture which is derived from the borosiloxane polymer during pyrolysis, expressed as a weight percentage based on the total weight of the silicon carbide powder and the char derived from the preceramic borosiloxane polymer, is greater than 0.1 weight percent; and

(b) forming said uniform mixture into a desired shape under pressure at a temperature below 500°C. to obtain said handleable green body with a green strength of 3.45 MPa (500 psi) or above.

The present invention further relates to a uniform mixture for producing a highly densified silicon carbide body comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that:

(i) the amount of boron in the mixture is 0.08-3 weight percent, based on the total weight of the silicon carbide powder and the char derived from the curable preceramic borosiloxane polymer, and (ii) the amount of free or excess carbon in the mixture which is derived from the borosiloxane polymer during pyrolysis, expressed as a weight percentage based on the total weight of the silicon carbide powder and the char derived from the curable preceramic borosiloxane polymer, is greater than 0.1 weight percent.

The present invention relates accordingly to the preparation of highly densified sintered bodies having a density above 2.4 g/cm$^3$ from preceramic borosiloxane polymers, silicon carbide powder, a curing agent for the borosiloxane and, optionally, an additional crosslinking agent for the borosiloxane, but without additional sintering aids. The sintered bodies produced from the practice of this invention have densities greater than 2.4 g/cm$^3$, which corresponds to 75% of the theoretical density of silicon carbide (3.21 g/cm$^3$). Such highly densified bodies are useful as light-weight refractory ceramics.

The novel compositions of the invention can also be used to prepare handleable green bodies. By "handleable green bodies", we mean green bodies which have sufficient green strength to be handled or machined to a desired shape prior to sintering. Green strengths 3.45 MPa (500 psi) or above being obtained in the practice of this invention.

The green bodies may be formed by conventional techniques known in the art. Such methods include pressure molding, uniaxial pressing, isopressing, extrusion, transfer molding, injection molding and the like. The present invention is particularly advantageous in this respect since the composition of the preceramic mixture can easily be changed to accommodate the use of multiple molding techniques without affecting the quality of the sintered product.

Because the preceramic mixture includes a borosiloxane, green bodies formed by the above techniques are generally strong enough to be handled or further shaped by methods such as machining, milling etc. This not only alleviates the problems associated with handling fragile objects, but it allows for the production of more complex shapes through flexibility in product design.

The shaped green bodies are then fired to an elevated temperature under an inert atmosphere to convert them into ceramic articles having densities greater than 75% of theoretical. It is preferred that the density of the ceramic article be greater than 85% of theoretical (2.7 g/cm$^3$). It is more preferred that the density be greater than 2.9 g/cm$^3$ (90% of theoretical); it is most preferred that the density be greater than 3.05 g/cm$^3$ (95% of theoretical).

Upon pyrolysis, the borosiloxanes of this invention yield both SiC and free carbon. This factor tends to decrease the amount of shrinkage that occurs when the mixture is sintered, especially when compared with the prior teaching of (Prockazka) US-A-4004934 in which the binders pyrolyze to entirely free carbon. Because less shrinkage occurs, sintered objects with increased tolerance control can be formed.

The compositions of this invention may be sintered either under pressure or by using a pressureless process to produce a highly densified ceramic article. Since the sintering process employing pressure will generally produce ceramic articles with higher density, such a method would be preferred if maximum density were desired. Generally, however, the pressureless sintering process is preferred because of the simplified operations involved.

Inert atmospheres are used for sintering to prevent oxygen incorporation and silica formation. The sintering process as well as the density of the sintered product are thereby enhanced. For purposes of this invention, an inert atmosphere is meant to include an inert gas, vacuum or both. If an inert gas is used it may be, for example, argon, helium or nitrogen. If a vacuum is used, it may be, for example, in the range of 13.3 Pa to 26.6 kPa (0.1-200 torr), preferably 13.3 to 39.9 kPa (0.1-0.3 torr). Exemplary of a combined process consists in firing the composition in argon up to 1150°C firing from 1150 to 1575°C in a vacuum and firing from 1575 to 2070°C under argon.

In addition to the above advantages of an inert atmosphere, the use of nitrogen during sintering can reduce the conversion of beta-SiC to alpha-SiC grains. The inhibition of this conversion is seen as a particular advantage in ceramic formation since large alpha SiC grains prevent ultimate densification and, thus, may be the site of a flaw in the ceramic product. However, since the use of nitrogen decreases the rate of sintering, increased firing temperatures are often necessary.

Sintering may be performed in any conventional high temperature furnace equipped with a means to control the furnace atmosphere. Temperatures of 1900°C or higher are generally used with the preferred range being 1950-2200°C. The most preferred sintering temperature is 2070°C. Though lower temperatures can be used, the ceramic product may not possess the desired density.

The temperature schedule for sintering depends on both the volume of parts to be fired and the composition of the mixture. For smaller objects the temperature may be elevated relatively rapidly. For larger objects or those with large concentrations of the borosiloxane, however, more extended programs are needed to create uniform ceramic bodies.

The borosiloxanes useful in this invention are generally well known in the art. Those selected must be capable of being converted to ceramic materials with a significant ceramic char yield, generally greater than 20 weight percent. However, since the char yield is inversely related to the shrinkage of the ceramic during firing, those with higher yields, such as char yields greater than 30 weight percent, are preferred.

The borosiloxanes utilized in the invention also yield a ceramic char containing free carbon. Borosiloxanes in which the ceramic char contains at least 10 weight percent free carbon are preferred and those containing at least 30 weight percent are more preferred.

So long as the borosiloxane can be converted to a ceramic char with sufficient char yield and free carbon as described above, its structure is not critical. The borosiloxane may contain units of general structure [$R_3SiO_{0.5}$], [$R_2SiO$], [$RSiO_{1.5}$], [$BO_{1.5}$], [RB0], [$R_2BO_{0.5}$] and [$SiO_2$] where each R is independently selected from the group consisting of hydrogen, alkyl radicals containing 1 to 20 carbon atoms such as methyl, ethyl, propyl etc., phenyl radicals and vinyl radicals. Generally, borosiloxanes which contain phenyl groups are preferred as such groups easily allow for the formation of ceramic chars with sufficient free carbon. Borosiloxanes which contain vinyl groups are also preferred since vinyl groups attached to silicon provide a mechanism whereby the borosiloxane can be cured prior to sintering. Borosiloxanes where R is almost exclusively methyl are generally not suitable for use in this invention as there is insufficient free carbon in the resulting ceramic char. Preferred borosiloxanes contain varying amounts of [$PhSiO_{1.5}$], [$Me_2SiViO_{0.5}$], [$BO_{1.5}$] and [$Ph_2SiO$] units, but other units such as [$ViSiO_{1.5}$], [PhMeSiO], [MeHSiO], [MeViSiO], [$Ph_2SiO$], [$Me_2SiO$], [$Me_3SiO_{0.5}$] and the like are also useful. Mixtures of borosiloxanes may also be employed herein.

The use of such borosiloxanes as binders for the SiC powder is particularly advantageous over binders of the prior art since the substituents on the polymer can be changed to achieve the desired amount of free carbon and boron in the char. In this manner, the polymer can be tailored to yield a polymer/SiC ratio in the preceramic mixture which is suitable for the molding application utilized and still have the appropriate free carbon in the char. If one were to use the polymeric carbon sources of Prockazka (US-A-4,004,934) which result in a char consisting of 100% free carbon, for instance, increasing the polymer/SiC ratio of the preceramic mixture for a given molding technique would result in large carbon excesses, thus impeding the ultimate densification of the ceramic body.

The borosiloxanes of this invention can be prepared by techniques well known in the art. The preferred method, however, comprises copolymerizing either boric acid esters or boric acid with silicon alkoxides or siloxanes in the presence of trifluoromethylsulfonic acid or trifluoroacetic acid, water and heat. In a typical process, the boric acid ester/boric acid is added to a stirred mixture of silicon alkoxides/siloxanes, distilled water and acid. The reaction is refluxed for 2-18 hours. The methanol and water thereby produced is then removed and the resin cooled. Toluene is then added and the solution is again refluxed (with water being removed) until clear. The resin is again cooled and $Me_2ViSiCl$ (an endblocker) added. The solution is stirred for 0.5-48 hours and then concentrated in vacuo to yield the polymer. The present inventors have discovered that the use of trifluoroacetic acid in the above reaction is preferred if vinyl groups are present since they are thereby more easily retained.

Such methods, as well as others, are described in US-A-4,152,509 and US-A-4,248,814 (granted to Yajima et al.) and Noll, Chemistry and Technology of Silicones, chapter 5 (translated 2d Ger. Ed., Academic Press, 1968). Specific methods for the preparation of suitable borosiloxanes are also illustrated in the examples included in the present application.

The preceramic borosiloxane is present in the compositions of the present invention at such a level that (a) the amount of boron is 0.08-3 weight percent and (b) the free carbon value of the mixture (as defined below) is greater than 0.1 weight percent, both based on the total weight of the silicon carbide powder and the char derived from the preceramic borosiloxane.

What is meant by "free carbon value of the mixture" in this invention is the amount of free or excess carbon derived from the borosiloxane during pyrolysis expressed as a weight percentage based on the total weight of the silicon carbide powder and the char derived from the borosiloxane. The total amount of carbon in the ceramic char equals the amount of free or excess carbon plus the amount of carbon in the form of silicon carbide.

The amount of boron and free carbon derived from the borosiloxane is determined by pyrolysis of the borosiloxane and the curing agent and, if present, the crosslinking agent, in the absence of any silicon carbide powder, to an elevated temperature under an inert atmosphere until a stable ceramic char is obtained. For the purposes of this invention, a "stable ceramic char" is defined as the ceramic char produced at an elevated temperature which will not significantly decrease in weight upon further exposure at such elevated temperature. Normally, a stable ceramic char is produced upon pyrolysis at 1800°C for 30 minutes under argon. Other elevated temperatures can be used to form the stable ceramic char but the length of exposure to the elevated temperature will need to be increased for temperatures below 1800°C.

Both the ceramic yield and the boron, silicon and carbon content of the stable ceramic char are then determined. Using a rule of mixtures, the amount of SiC and free carbon of the stable ceramic char can be calculated. The amount of free carbon thus calculated and the amount of boron are normally expressed as the amounts produced per gram of preceramic borosiloxane. Knowing the amount of boron and free carbon produced by pyrolysis of the borosiloxane, one can determine how much borosiloxane is required to obtain a borosiloxane/silicon carbide mixture with the desired amount of boron and the desired free carbon value. Naturally, if one is using the same or very similar borosiloxane to prepare a sintered body, it is not required that the amount of boron and free carbon produced per gram of borosiloxane be determined every time.

This procedure can perhaps be best illustrated by example. Assume a borosiloxane (100 g) which gives, upon pyrolysis to 1800°C a char yield of 50 weight percent which contains 40 weight percent carbon, 55 weight percent silicon and 5 weight percent boron. Such a char contains 27.5 g (0.98 moles) silicon and 2.5 g boron. Using a rule of mixtures, the char also contains 0.98 moles (11.8 g) of carbon in the form of SiC. Since the char contains 20 g carbon, the amount of free carbon in the char is 8.2 g (20 g minus 11.8 g). Thus, each gram of the preceramic borosiloxane yields 0.082 g free carbon and 0.025 g boron.

If the preceramic mixture is to contain 100 g of SiC, the following 2 equations are then used to calculate the amount of borosiloxane (x) to be added for a given free carbon value (FCV) or boron concentration ([B]):

$$FCV = \frac{(0.082x)}{(100 + 0.5x)} = 0.002 - 0.03\ (0.1 - 3\%)$$

and:

$$[B] = \frac{(0.025x)}{(100 + 0.5x)} = 0.001 - 0.03\ (0.08 - 3\%)$$

The numerator in the above equations represents the total amount of free carbon or boron produced by x g of borosiloxane. The denominator in the above equations represents the amount of silicon carbide (100 g) plus the char derived from x g of borosiloxane.

Since the polymer provides both the free carbon and the boron content of the char, an amount of polymer must be chosen which will satisfy both equations. If both equations cannot be satisfied with a given polymer, the structure can be changed to alter the char composition or additional free carbon and/or sintering aids can be added to the preceramic mixture.

Using this procedure, the amount of borosiloxane required to prepare the compositions of this invention can be determined. This procedure avoids the costly and time consuming trial and error method which might otherwise be required.

This seemingly complex process of determining the amount of borosiloxane to be added can be summarized in the following steps:

1) A known weight of the borosiloxane is pyrolyzed to stable char;
2) the char is weighed and the result expressed as a weight percent of the starting compound, i.e. the "char yield" of the borosiloxane;
3) The resultant char is analyzed for elemental content;
4) Using a rule of mixtures, the amount of "free carbon" in the char is calculated by subtracting the amount of carbon bound to silicon from the total carbon present. The resultant value is expressed as free carbon produced per gram of starting material. The amount of boron produced per gram of starting material is also calculated; and

5) The amount of borosiloxane (B) to be added for a given free carbon value or boron concentration is calculated using the following equations:

$$FCV = \frac{(FCB \times B)}{(SiC) + (CYB \times B)}$$

and

$$[B] = \frac{(ABB \times B)}{(SiC) + (CYB \times B)}$$

Where FCB = grams of Free Carbon produced per gram of the Borosiloxane; B = grams of borosiloxane; ABB = Amount of Boron produced per gram of Borosiloxane; and CYB = Char Yield of the borosiloxane.

The free carbon value of the mixture must be greater than 0.1 weight percent based on the total weight of the silicon carbide powder and the char derived from the borosiloxane. In the case of free carbon values below 0.1 weight percent, the density of the sintered body will generally fall below 2.4 g/cm$^3$ (75% of theoretical). It is generally preferred that the free carbon value of the mixture be greater than 0.5% with the resultant density of the sintered body being greater than 85% of theoretical. It is more preferred that the free carbon value of the mixture be between 0.5 and 3.0 weight percent with a range of 1.0 to 2.0 weight percent being even more preferred. The optimum density is generally obtained when the free carbon value of the mixture is 1.5 weight percent.

Boron is necessary in the present invention to facilitate sintering. The amount of boron derived from the borosiloxane is equivalent to 0.08 to 3.0 weight percent based on the total weight of the silicon carbide powder and the char derived from the borosiloxane. Quantities below this amount inhibit proper sintering and larger quantities often result in products which do not have the desired density.

The compositions of the invention also include silicon carbide powders. Many of these materials are commercially available and well known in the art. Both alpha-SiC and beta-SiC powders, as well as mixtures, can be used. Generally, SiC powders with an average particle size below ten micrometers are preferred; powders with an average particle size below one micrometer are more preferred.

The compositions of this invention also contain curing agents which are used to crosslink the borosiloxane prior to sintering. The green bodies produced thereby generally have higher strengths than the uncured articles and, thus, can better withstand any handling or machining processes prior to sintering. These curing agents are generally activated by heating the green body containing the curing agent to temperatures in the range of 50-300°C.

Conventional curing agents which are useful in the present invention are well known in the art. Examples include organic peroxides such as dibenzoyl peroxide, bis-p-chlorobenzol peroxide, bis-2,4-dichlorobenzol peroxide, di-t-butyl peroxide, dicumyl peroxide, t-butyl perbenzoate, 2,5-bis(t-butylperoxy)-2,3-dimethylhexane and t-butyl peracetate; and platinum-containing curing agents such as platinum metal, $H_2PtCl_6$ and $((C_4H_9)_3P)_2PtCl_2$. Other conventional curing agents known in the art may also be used. The curing agent is present in an effective amount, i.e. an amount sufficient to induce crosslinking in the borosiloxane. Therefore, the actual amount of the curing agent will depend on the activity of the actual agent used and the amount of borosiloxane present. Normally, however, the peroxide curing agent will be present at 0.1 to 5.0 weight percent based on the weight of the compound to be cured with the preferred amount being 2.0 weight percent. When platinum-containing curing agents are used, the amount will normally be such that platinum is present at 1 to 1000 ppm based on the weight of the compound to be cured with the preferred amount being 50 to 150 ppm platinum.

In addition to the above curing agent, a room temperature crosslinking agent may also be included in the mixture to modify the cure characteristics. These agents can include, for example, polyfunctional silanes or siloxanes. The preferred crosslinking agents are siloxanes with Si-H functional bonds such as $Ph_2Si(OSiMe_2H)_2$ or $PhSi(OSiMe_2H)_3$.

The addition of other processing aids such as lubricants, deflocculants and dispersants is also within the scope of this invention. Examples of such compounds include stearic acid, mineral oil, paraffin, calcium stearate, aluminum stearate, succinic acid, succinimide, succinic anhydride or various commercial products such as Oloa 1200$^{tm}$.

Once the amounts of the various components have been determined, they are combined in a manner which ensures a uniform and intimate mixture so that areas of varying density throughout the sintered product are avoided. Uniform and intimate mixtures can be prepared by using conventional blending techniques such as grinding the various powders in either the dry or wet state or ultrasonic dispersion. Generally preferred is wet grinding where the various powders are mixed and ground with organic solvents and the solvent thereafter removed. Other mixing and grinding methods will be apparent to those skilled in the art.

The uniform and intimate mixture may then be formed into the desired shape. Preferably, the desired shape is

formed under pressure using such methods as injection molding, uniaxial pressing, isopressing, extrusion, transfer molding and the like.

The composition is preferably cured prior to its final shaping. Curing procedures are well known in the art. Generally, such curing can be carried out by heating the article to a temperature in the range of 50 to 450°C, preferably in an inert atmosphere such as argon or nitrogen.

Once the final shape has been obtained, the article is sintered in an inert atmosphere and/or under vacuum to a temperature of 1900°C, or more. The preferred sintering temperature is 1950 to 2200°C, with 2070°C being most preferred.

Although not wishing to be limited by theory, it is thought that the free carbon derived from the borosiloxane plays two different roles in the formation of highly densified sintered bodies. First, it helps remove oxygen present in the silicon carbide powder; and, second, it apparently acts as an additional sintering aid. Silicon carbide powders often contain so-called "free carbon." However, the "free carbon" present in the silicon carbide powder does not appear to be as active or effective as free carbon generated in situ from the borosiloxane. It is not clear whether the free carbon produced in situ is more active chemically or whether it is simply more evenly dispersed. In any event, when the free carbon value of the mixture (as defined above) is 1.5 weight percent, sintered bodies with maximum densities are obtained.

So that those skilled in the art can better appreciate and understand the invention, the following examples are given. Unless otherwise indicated, all percentages are by weight. Throughout this specification "Me" represents a methyl group, "Ph" represents a phenyl group, "Vi" represents a vinyl group and "B" represents the boron content;

In the following examples, the analytical methods used were as follows:

Proton NMR spectra were recorded on either a Varian EM360 or EM390 spectrometer and the results presented herein in ppm; fourier transform IR spectra were recorded on a Nicolet 5 DX spectrometer. Gel permeation chromatography (GPC) data were obtained on a Waters GPC equipped with a model 600E systems controller, a model 490 UV and model 410 Differential Defractometer detectors; all values are relative to polystyrene. TMA data were recorded on a Du Pont 940 thermomechanical analyzer (TMA) interfaced to an Omnitherm 2066 Computer.

Carbon, hydrogen and nitrogen analysis were done on a Control Equipment Corporation 240-XA Elemental Analyzer. Oxygen analysis was done on a Leco Oxygen Analyzer equipped with an Oxygen Determinator 316 (Model 783700) and an Electrode Furnace EF100. Silicon and boron were determined by a fusion technique which consisted of converting the material to soluble forms of silicon and boron and analyzing the solute for total silicon or boron by atomic absorption spectrometry.

Compounding was done on a Brabender Plasticorder (Model PL- V151) equipped with roller blades. Test bars were formed on a Carver laboratory press (Fred S. Carver Inc., Summit, N.J.). Pyrolysis was carried out in an Astro graphite element tube furnace Model 1000-3060-FP12 equipped with an Eurotherm Controller/Programmer Model 822. The furnace was equipped with an Ircon Modeline Plus optical pyrometer to monitor the temperature above 900°C. Flex strengths (using the four-point bend technique) were determined on either a Model TTC or Model 8562 Instron instrument. Fired densities were measured by water immersion techniques according to ASTM C373-72. Machined test bars were prepared according to Mil. Std. 1942 (MR).

The SiC powder used was IBIDEN BETARUNDUM UF$^{tm}$ silicon carbide which is a mixture of 5 to 8% alpha-SiC and 92 to 95% beta-SiC. The boron used was amorphous boron powder from Cerac Inc. The Phenolic resin was obtained from Union Carbide.

Example I - Preparation of Sintered Test Bars with $(PhSiO_{1.5})_{0.60}(BO_{1.5})_{0.20}(Me_2SiViO_{0.5})_{0.20}$

A. Polymer Synthesis

20.76 g (0.20 mole) of $B(OMe)_3$ was added to a stirred mixture of 118.8 g (0.60 mole) of $PhSi(OMe)_3$, 18.6 g (0.10 mole) of $(Me_2SiVi)_20$, 46.8 g (2.6 mole) of distilled water and 0.35 g of $CF_3S0_3H$. The reaction was refluxed for three hours and then the methanol and water removed by distillation until the distillate temperature was above 90°C. The reaction was cooled and 0.555 g of $NaHC0_3$ and 163.7 g of toluene added. The toluene solution was refluxed and the water removed in a Dean-Stark trap. When the distillate was clear (3-4 hours), the reaction was cooled and 1 mL of $Me_2SiViCl$ added. After stirring for 16 hours, the reaction was filtered and the filtrate concentrated in vacuo. Yield = 85.1 g (82.7%). $^1H$ NMR (CDCl3) d -0.32 - 0.45 ($SiMe_2$, broad overlapping singlets), 5.42 - 5.95 (Si-Vi, broad multiplet), 6.38 - 7.98 (Si-Ph, broad singlet): calculated mole ratio of SiPh/Si-Vi/$SiMe_2$ = 3.0/1.0/1.0, found 4.06/1.00/1.19. IR (thin film, KBr disc); $cm^{-1}$ (intensity): 3072 (w), 3052 (w), 3015 (w), 2963 (w), 1958 (w), 1888 (w), 1821 (w), 1821 (w), 1659 (w), 1595 (w), 1489 (w), 1430 (m), 1408 (m), 1261 (s), 1082 (vs), 962 (m), 844 (m), 803 (s), 742 (m), 718 (m), 699 (m). The TMA softening point (Tg) of the resin was 90.9°C, GPC molecular weight (THF, polystyrene standard): Mw = 890, Mn = 365. The silanol content of the polymer was 0.93%. B in polymer: calculated 2.1%, found 1.74 $\pm$ 0.05%.

B. Polymer Pyrolysis and Char Composition Calculations

A blend of 14.84 g of the resin formed in part A, 2.64 g of $Ph_2Si(OSiMe_2H)_2$ and 0.852 g of Lupersol 101 was prepared. An aliquot of the blend was crosslinked at 200°C for 3 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 36.8%. The elemental composition of the char was 49.9% carbon, 3.2% boron and 45.8% silicon. The following calculation was made based upon the carbon and boron analyses: 100 g of cured polymer gives 36.8 g of a ceramic char consisting of 46.9% (by difference) silicon, 49.9% carbon and 3.2% boron. The char consists of 24.7 g of SiC (67.0%), 1.2 g B (3.3%) and 10.9 g of excess C (29.6%). Therefore, every gram of polymer gives 0.257 g of SiC, 0.012 g of B and 0.109 g of excess carbon.

C. Test Bar Fabrication and Testing

35.03 g of SiC powder was ultrasonically dispersed into a toluene solution of 3.71 g of the resin formed in part A, 0.655 g of $Ph_2Si(OSiMe_2H)_2$ and 0.210 g of Lupersol 101 (FCV = 1.11%, [B] = 0.12%). The solvent was removed in vacuo. The residue was ground and passed through an 106 micrometer sieve. The sieved powder was uniaxially pressed into 35 x 8 x 3 mm test bars at 324.3 MPa (47 ksi). The test bars were cured for 3 hours at 200°C in an argon atmosphere (room temperature to 200°C at 3°C/minute). The density of the cured test bars averaged $2.17 \pm 0.01$ g/cm$^3$ (n = 6). The average 4-pt MOR flexural strength of the cured test bars was $17.3 \pm 4.1$ MPa ($2506 \pm 592$ psi). Aliquots of the cured test bars were fired to 2100°C using a temperature program of 15°C/minute from room temperature to 2100°C with 30 minute holds at 1400 and 2100°C. The density of the fired test bars averaged $3.06 \pm 0.01$ g/cm$^3$ and had an average 4-pt MOR flexural strength of $537.8 \pm 58.6$ MPa ($78.0 \pm 8.5$ ksi) (n = 8).

<u>Example</u> <u>II</u> - Preparation of Sintered test bars with $(PhSiO_{1.5})_{0.20}(BO_{1.5})_{0.40}(Ph_2SiO)_{0.20}(Me_2SiViO_{0.5})_{0.20}$

A. Polymer Synthesis

41.52 g (0.40 mole) of $B(OMe)_3$ was added to a stirred mixture of 39.6 g (0.20 mole) of $PhSi(OMe)_3$, 23.25 g (0.125 mole) of $(Me_2SiVi)_20$, 48.8 g (0.20 mole) of $Ph_2Si(OMe)_2$, 46.8 g (2.6 mole) of distilled water and 0.200 mL of $CF_3S0_3H$. The reaction was refluxed for two hours and then stirred at room temperature for 12 hours. The methanol and water were removed by distillation until the distillate temperature was above 90°C. The reaction was cooled and 0.56 g of $NaHC0_3$ and 115 g of toluene added. The toluene solution was refluxed and the water removed in a Dean-Stark trap. When the distillate was clear (3-4 hours), the reaction was cooled and 1 mL of $Me_2SiViCl$ added. After stirring for 0.5 hours, the reaction was filtered and the filtrate concentrated in vacuo. Yield = 90.75 g (92.7%). $^1H$ NMR (CDCl3) d -0.18 - 0.33 ($SiMe_2$, broad overlapping singlets) , 5.49 - 5.96 (Si-Vi, broad multiplet), 6.69 - 7.89 (Si-Ph, broad singlet): calculated mole ratio of $SiPh/Si\text{-}Vi/SiMe_2$ = 3.0/1.0/1.0, found 2.86/1.00/1.07. B in polymer: calculated 4.15%, found $3.61 \pm 0.05$%. IR (thin film, KBr disc); cm$^{-1}$ (intensity): 3220 (m), 3072 (w), 3051 (w), 2959 (w), 2256 (w), 1959 (w), 1890 (w), 1822 (w), 1593 (w), 1569 (w), 1430 (m), 1352 (m), 1256 (s), 1192 (m), 1129 (s), 1069 (vs), 998 (m), 957 (m), 837 (m), 787 (s), 741 (m), 719 (m), 698 (m). The silanol content of the polymer was 3.60%. The vinyl content was 6.19%.

B. Polymer Pyrolysis and Char Composition Calculations

A blend of 6.07 g of the resin formed in part A, 1.20 g of $Ph_2Si(OSiMe_2H)_2$ and 0.23 g of Lupersol 101 was prepared. An aliquot of the blend was crosslinked at 200°C for 3 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a char yield of 26.3%. The elemental composition of the char was 48.7% carbon, 5.0% boron and 41.2% silicon. The following calculation was made based upon the carbon and boron analyses: 100 g of cured polymer gives 26.3 g of a ceramic char consisting of 46.3% (by difference) silicon, 48.7% carbon and 5.0% boron. The char consists of 17.4 g of SiC (66.1%), 1.3 g B (4.9%) and 7.6 g of excess C (28.9%). Therefore, every gram of polymer gives 0.174 g of SiC, 0.013 g of B and 0.076 g of excess carbon.

C. Test Bar Fabrication and Testing

35.01 g of SiC powder was ultrasonically dispersed into a toluene solution of 3.71 g of the resin formed in part A, 0.656 g of $Ph_2Si(OSiMe_2H)_2$ and 0.206 g of Lupersol 101 (FCV = 0.78%, [B] = 0.13%). The solvent was removed in

vacuo. The residue was ground and passed through a 106 micrometer sieve. The sieved powder was uniaxially pressed into 35 x 8 x 3 mm test bars at 324.3 MPa (47 ksi). The test bars were cured for 3 hours at 200°C in an argon atmosphere (room temperature to 200°C. at 3°C/minute). The density of the cured test bars averaged 2.23 ± 0.01 g/cm$^3$ (n = 6). The average 4-pt MOR flexural strength of the cured test bars was 11.9 ± 3.5 MPa (1733 ± 501 psi). Aliquots of the cured test bars were fired to 2100°C using a temperature program of 15°C/minute from room temperature to 2100°C with 30 minute holds at 1400 and 2100°C. The density of the fired test bars averaged 3.14 ± 0.01 g/cm$^3$. The average 4-pt MOR flexural strength of machined test bars was 511.3 ± 58.6 MPa (74.1 ± 8.5 ksi) (n = 10). The crystalline SiC phase was 80% beta and 20% alpha.

Example III - Preparation of Sintered Test Bars with $(PhSiO_{1.5})_{0.65}(BO_{1.5})_{0.10}(Me_2SiViO_{0.5})_{0.25}$ and $(PhSiO_{1.5})_{0.20}(BO_{1.5})_{0.40}(Ph_2SiO)_{0.20}(Me_2SiViO_{0.5})_{0.20}$

A. Polymer Synthesis

1) 10.38 g (0.10 mole) of $B(OMe)_3$ was added to a stirred mixture of 128.7 g (0.65 mole) of PhSi(OMe)3, 23.25 g (0.125 mole) of $(Me_2SiVi)$20, 40.5 g (2.3 mole) of distilled water and 0.200 mL of $CF_3S0_3H$. The reaction was refluxed for three hours and then the methanol and water removed by distillation until the distillate temperature was above 90°C. The reaction was cooled and 0.576 g of $NaHC0_3$ and 101 g of toluene added. The toluene solution was refluxed and the water removed in a Dean-Stark trap. When the distillate was clear (3-4 hours), the reaction was cooled and 1 mL of $Me_2SiViCl$ added. After stirring for 0.5 hour, the reaction was filtered and the filtrate concentrated in vacuo. Yield = 98 g (88.6%). $^1$H NMR (CDC13) d -0.40 - 0.27 ($SiMe_2$, broad overlapping singlets), 5.27 - 5.90 (Si-Vi, broad multiplet), 6.50 - 7.70 (Si-Ph, broad singlet): calculated mole ratio of SiPh/Si-Vi /$SiMe_2$ = 2.6/1.0/1.0, found 2.97/1.01/1.00. B in polymer: calculated 0.98%, found 0.80 ± 0.05%. IR (thin film, KBr disc); cm$^{-1}$ (intensity): 3618 (w), 3074 (w), 3051 (w), 3008 (w), 2958 (w), 1890 (w), 1824 (w), 1595 (w), 1490 (w), 1430 (m), 1406 (m), 1361 (m), 1255 (m), 1135 (s), 1065 (vs), 999 (m), 958 (m), 837 (s), 788 (s), 740 (m), 698 (m). The TMA softening point (Tg) of the resin was 23.8°C. GPC molecular weight (THF, polystyrene standard): Mw = 889, Mn = 463. The silanol content of the polymer was 1.47%.

B. Polymer Pyrolysis and Char Composition Calculations

A blend of 7.42 g of the resin formed in part A, 1.33 g of $Ph_2Si(OSiMe_2H)_2$ and 0.42 g of Lupersol 101 was prepared. An aliquot of the blend was crosslinked at 200°C for 3 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a char yield of 38.0%. The elemental composition of the char was 52.8% carbon, 1.0% boron and 46.6% silicon. The following calculation was made based upon the carbon and boron analyses: 100 g of cured polymer gives 38.O g of a ceramic char consisting of 46.2% (by difference) silicon, 52.8% carbon and 1. 0% boron. The char consists of 25.1 g of SiC (66.0%), 0.38 g B (0.10%) and 12.5 g of excess C (32.9%). Therefore, every gram of polymer gives 0.251 g of SiC, O.004 g of B and O.125 g of excess carbon.

C. Test Bar Fabrication and Testing

1) 35.00 g of SiC powder was ultrasonically dispersed into a toluene solution of 3.71 g of the resin formed in part A, 0.654 g of $Ph_2Si(OSiMe_2H)_2$ and 0.207 g of Lupersol 101 (FCV = 1.27%, [B] = 0.04%). The solvent was removed in vacuo. The residue was ground and passed through a 106 micrometer sieve. The sieved powder was uniaxially pressed into 35 x 8 x 3 mm test bars at 324.3 MPa (47 ksi). The test bars were cured for 3 hours at 200°C in an argon atmosphere (room temperature to 200°C at 3°C/minute). The density of the cured test bars averaged 2.17 ± 0.01 g/cm$^3$ (n = 6). The average 4-pt MOR flexural strength of the cured test bars was 39.3 ± 5.1 MPa (5701 ± 744 psi). Based upon the boron concentration in the polymer, the B in the mix was 0.075%. Aliquots of the cured test bars were fired to 2100°C using a temperature program of 15°C/minute from room temperature to 2100°C with 30 minute holds at 1400 and 2100°C. The density of the fired test bars averaged 2.56 ± 0.01 g/cm$^3$. The low fired density was a result of insufficient boron in the fired test bars.

2) 35.00 g of SiC powder was ultrasonically dispersed into a toluene solution of 1.86 g of the resin prepared in Example II (part A), 1.86 g of the resin prepared in Example III (part A), O.665 g of $Ph_2Si(OSiMe_2H)_2$ and 0.201 g of Lupersol 101 (FCV = 1.03%, [B] = 0.087%). The solvent was removed in vacuo. The residue was ground and passed through a 90 micrometer sieve. The sieved powder was uniaxially pressed into 35 x 8 x 3 mm test bars at 324.3 MPa (47 ksi). The test bars were cured for 2 hours at 250°C in an argon atmosphere (room temperature to 250°C at 4°C/minute). The density of the cured test bars averaged 2.29 ± 0.01 g/cm$^3$ (n = 6). The average 4-pt

MOR flexural strength of the cured test bars was 19.4 ± 5.4 MPa (2807 ± 789 psi). Based upon the boron concentration in the polymers, the B in the mix was 0.21%. Aliquots of the cured test bars were fired to 2100°C using a temperature program of 15°C/minute from room temperature to 2100°C with 30 minute holds at 1400 and 2100°C. The density of the fired test bars averaged 3.14 ± 0.01 g/cm$^3$ (n = 15). The average 4-pt MOR flexural strength of machined test bars was 532.3 ± 58.6 MPa (77.2 ± 8.5 ksi) (n = 10). The crystalline SiC phase in the fired test bars was 87% beta and 13% alpha. The B found in the fired test bars was 0.21 ± 0.05%.

The above example demonstrates that it is possible to blend two different borosiloxane polymers together to achieve the boron concentration necessary for sintering.

<u>Example</u> <u>IV</u> - Preparation of Sintered test bars with $(PhSiO_{1.5})_{0.60}(BO_{1.5})_{0.20}(Me_2SiViO_{0.5})_{0.20}$: Comparison of Acid and Base Catalyzed Polymer Equilibrations

A. Polymer Synthesis

1) A toluene solution of 20.8 g (0.20 mole) of B(OMe)3, 96 g of the siloxane resin prepared in Example I (part A) and 0.20 mL of CF3S03H was refluxed for 6 hours. The reaction was cooled to room temperature and allowed to stir overnight. 5.0 mL of distilled water was then added and the methanol removed by distillation. When all of the methanol had distilled, the reaction was cooled and 0.78 g of NaHC03 was added followed by 11.0 mL of a 3% solution of KOH in distilled water. The reaction was refluxed and the water removed in a Dean-Stark trap. When the distillate was clear, the reaction was cooled to room temperature and quenched with 1.0 mL of $Me_2ViSiCl$. After stirring for one hour, the reaction was filtered through a 0.2 micrometer membrane filter. Concentration of the filtrate in vacuo gave 91.6 g of a resin (88.9% yield). The resin had a TMA softening point (Tg) of 67°C. $^1H$ NMR (CDCl3) d -0.16 - 0.33 ($SiMe_2$, broad overlapping singlets), 5.68 - 5.98 (Si-Vi, broad multiplet), 6.71 - 7.88 (Si-Ph, broad singlet): calculated mole ratio of $SiPh/Si\text{-}Vi/SiMe_2$ = 3.0/1.0/1.0, found 2.96/1.00/2.5. B in polymer: calculated 2.1%, found 0.67 ± 0.05%. IR (thin film, KBr disc); cm$^{-1}$ (intensity): 3217 (w), 3073 (w), 3051 (w), 2961 (w), 1594 (w), 1430 (m), 1407 (w), 1259 (m), 1133 (s), 1056 (s), 998 (m), 957 (m), 839 (m), 804 (m), 788 (s), 729 (m), 697 (m).

2) A solution of 20.8 g (0.20 mole) of $B(OMe)_3$, 96 g of the siloxane resin prepared in Example I (part A) and 0.20 mL of $CF_3S0_3H$ in 114 g of toluene was refluxed for 4 hours. The solution was cooled to room temperature and 7.0 mL of distilled water added. After stirring for 2 hours, the methanol was removed by distillation (pot temperature reached 100°C). The residual water was removed by azeotropic distillation. The solution was cooled and 1.2 g of $NaHCO_3$ and 1.0 mL of $Me_2ViSiCl$ were added. After stirring for several hours, the solution was filtered through a 0.2 micrometer membrane filter. Concentration of the filtrate in vacuo gave a resin with a silanol content of 2.82% and a B of 1.61%. IR (thin film, KBr disc); cm$^{-1}$ (intensity): 3140 (w), 3075 (w), 3053 (w), 3008 (w), 2963 (m), 11957 (w), 1889 (w), 1821 (w), 1595 (m), 1481 (m), 1430 (s), 1378 (s), 1261 (m), 1136 (s), 1056 (s), 998 (m), 883 (m), 842 (m), 805 (m), 730 (m), 697 (m). GPC molecular weight (THF, relative to polystyrene): Mw = 2771, Mn = 544.

B. Polymer Pyrolysis and Char Composition Calculations

1) A blend of 3.72 g of the resin from Example IV (part A-1), 0.688 g of $Ph_2Si(OSiMe_2H)_2$ and 0-208 g of Lupersol 101 was prepared. An aliquot of the blend was crosslinked at 250°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 38.4%. The elemental composition of the char was 51.3% carbon, 1.0% boron and 46.7% silicon. The following calculation was made based upon the carbon and boron analyses: 100 g of cured polymer gives 38.4 g of a ceramic char consisting of 47.7% (by difference) silicon, 51.3% carbon and 1.0% boron. The char consists of 26.2 g of SiC (68.1%), 0.40 g B (1.0%) and 11.8 g of excess C (30.7%). Therefore, every gram of polymer gives 0.262 g of SiC, 0.004g of B and 0.118 g of excess carbon.

2) A blend of 7.43 g of the resin from Example IV (part A-2), 1.315 g of $Ph_2Si(OSiMe_2H)_2$ and 0.416 g of Lupersol 101 was prepared. An aliquot of the blend was crosslinked at 250°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 37.9%. The elemental composition of the char was 48.1% carbon, 2.02% boron and 49.2% silicon. The following calculation was made based upon the carbon and boron analyses: 100 g of cured polymer gives 37.9 g of a ceramic char consisting of 49.9% (by difference) silicon, 48.1% carbon and 2.02% boron. The char consists of 27.01 g of SiC

(71.3%), 0.77g B (2.0%) and 10.13 g of excess C (26.7%). Therefore, every gram of polymer gives 0.270 g of SiC, 0.008 g of B and 0.101 g of excess carbon.

C. Test Bar Fabrication and Testing

1) 35.0 g of SiC powder was ultrasonically dispersed into a toluene solution of 3.71 g of the resin formed in V A-1, 0.65 g of $Ph_2Si(OSiMe_2H)_2$ and 0.20 g of Lupersol 101 (FCV = 1.2%, [B] = 0.04%). The solvent was removed in vacuo. The residue was ground and passed through a 106 micrometer sieve. The sieved powder was uniaxially pressed into 35 x 8 x 3 mm test bars at 324.3 MPa (47 ksi). The test bars were cured for 2 hours at 250°C in an argon atmosphere (room temperature to 250°C at 4°C/minute). The density of the cured test bars averaged 2.25 ± 0.03 g/cm$^3$ (n = 6). The average 4-pt MOR flexural strength of the cured test bars was 38.9 ± 4.5 MPa (5635 ± 655 psi). Aliquots of the cured test bars were fired to 2100°C using a temperature program of 15°C/minute from room temperature to 2100°C with 30 minute holds at 1400 and 2100°C. The density of the fired test bars averaged 2.43 ± 0.05 g/cm$^3$.

2) 35.0 g of SiC powder was ultrasonically dispersed into a toluene solution of 3.703 g of the resin formed in V A-2, 0.654 g of $Ph_2Si(OSiMe_2H)_2$ and 0.210 g of Lupersol 101 (FCV = 1.03%, [B] = 0.08%). The solvent was removed in vacuo. The residue was ground and passed through a 106 micrometer sieve. The sieved powder was uniaxially pressed into 35 x 8 x 3 mm test bars at 324.3 MPa (47 ksi). The test bars were cured for 2 hours at 250°C in an argon atmosphere (room temperature to 250°C at 4°C/minute). The density of the cured test bars averaged 2.24 ± 0.01 g/cm$^3$ (n = 6). The average 4-pt MOR flexural strength of the cured test bars was 19.9 ± 2.9 MPa (3883 ± 421 psi). Aliquots of the cured test bars were fired to 2100°C using a temperature program of 15°C/minute from room temperature to 2100°C with 30 minute holds at 1400 and 2100°C. The density of the fired test bars averaged 2.93 ± 0.07 g/cm$^3$. The above example demonstrates that the when boron is incorporated into a polymer by an equilibration method, it is preferred to use acid catalysis.

<u>Example V</u> - Preparation of Sintered Test Bars from $(PhSi_{0.5})_{0.25}(PhSiO_{1.5})_{0.25}(BO_{1.5})_{0.30}(Me_2SiViO_{0.5})_{0.20}$

A. Polymer Synthesis (Reference 8452-76)

31.1 g (0.30 mole) of $B(OMe)_3$ was added to a stirring mixture of 49.58 g (0.25 mole) of $PhSi(OMe)_3$, 18.6 g (0.10 mole) of $(Me_2SiVi)_20$, 61.0 g (0.25 mole) of $Ph_2Si(OMe)_2$, 46.8 g (2.6 mole) of distilled water and 0.200 mL of $CF_3S0_3H$. The reaction was refluxed for four hours. The methanol and water were then removed by distillation until the distillate temperature was above 90°C. The reaction was cooled and 0.56 g of $NaHC0_3$ and 250 g of toluene added. The toluene solution was refluxed and the water removed in a Dean-Stark trap. When the distillate was clear (3-4 hours), the reaction was cooled and then neutralized with 2.57 g of $NaHC0_3$. The mixture was stirred for 15 minutes and then 1.8 mL of $Me_2SiViCl$ was added. The solution was stirred for an additional three hours and then filtered through a 0.22 micrometer membrane filter. The filtrate was concentrated in vacuo to yield the polymeric product. Yield = 84.7 g (76.4%). B in polymer: calculated 2.93%, found 2.76 ± 0.05%. IR (thin film, KBr disc); cm$^{-1}$ (intensity): 3074 (w), 3053 (w), 3028 (w), 2964 (w), 1957 (w), 1888 (w), 1822 (w), 1594 (w), 1495 (w), 1430 (s), 1379 (s), 1262 (m), 1190 (m), 1135 (s), 1082 (s), 998 (m), 844 (m), 804 (m), 719 (m), 698 (m). The silanol content of the polymer was 2.89%. The TMA softening point (Tg) was 39.9°C. GPC molecular weight (THF, polystyrene standard): Mw= 661, Mn = 174.

B. Polymer Pyrolysis and Char Composition Calculations

A blend of 7.41 g of the resin formed in part A, 1.329 g of $Ph_2Si(OSiMe_2H)_2$ and 0.411 g of Lupersol 101 was prepared. An aliquot of the blend was crosslinked at 250°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 34.5%. The elemental composition of the char was 48.6% carbon, 3.83% boron and 51.2% silicon. The following calculation was made based upon the carbon and boron analyses: 100 g of cured polymer gives 34.5 g of a ceramic char consisting of 47.6% (by difference) silicon, 48.6% carbon and 3.83% boron. The char consists of 23.5 g of SiC (67.0%), 1.3 g B (3.8%) and 9.8 g of excess C (28.4%). Therefore, every gram of polymer gives 0.235 g of SiC, 0.013 g of B and 0.098 g of excess carbon.

C. Test Bar Fabrication and Testing

35.0 g of SiC powder was ultrasonically dispersed into a toluene solution of 3.70 g of the resin formed in part A, 0.66 g of $Ph_2Si(OSiMe_2H)_2$ and 0.206 g of Lupersol 101 (FCV = 1.0%, [B] = 0.13%). The solvent was removed in vacuo.

The residue was ground and passed through a 106 micrometer sieve. The sieved powder was uniaxially pressed into 35 x 8 x 3 mm test bars at 324.3 MPa (47 ksi). The test bars were cured for 3 hours at 250°C in an argon atmosphere (room temperature to 250°C at 4°C/minute). The density of the cured test bars averaged 2.19 ± 0.01 g/cm$^3$ (n = 6). The average 4-pt MOR flexural strength of the cured test bars was 16.4 ± 2.2 MPa (2378 ± 318 psi). Aliquots of the cured test bars were fired to 2070°C using a temperature program of room temperature to 300°C at 2°C/minute, 300 - 1150°C at 5°C/minute, 1150 - 1575°C at 5°C/minute in a vacuum, a three hour hold at 1575°C in a vacuum, 1575 - 2070°C at 5°C/minute with a one hour hold at 2070°C. The samples were cooled from 2070 to 100°C at 3°C/minute. The density of the fired test bars averaged 3.14 ± 0.01 g/cm$^3$ (n = 11).

<u>Example</u> <u>VI</u> - Preparation of Sintered Test Bars from $(Ph_2Si_{0.5})_{0.54}(BO_{1.5})_{0.36}(Me_2SiViO_{0.5})_{0.10}$

A. Polymer Synthesis

A mixture of 22.25 g (0.36 mole) of $B(OH)_3$, 18.6 g (0.10 mole) of $(Me_2SiVi)_20$, 131.8 g (0.54 mole) of $Ph_2Si(OMe)_2$ and 0.200 mL of $CF_3S0_3H$ in 200 mL of toluene was heated at 90°C for three hours. The methanol was then removed by distillation. When most of the methanol had distilled, the pot temperature was increased to 120°C and a portion of the toluene was collected. A total of 150.87 g of distillate was collected. The reaction was neutralized with 2.39 g of $NaHC0_3$. After stirring for 45 minutes, 7.80 g of $Me_2SiViCl$ was added and the solution allowed to stir overnight. After filtering the reaction through a 0.22 micrometer membrane filter and concentrating the filtrate in vacuo, 116.6 g of a light brown resin was obtained. B in polymer: calculated 3.02%, found 2.30 ± 0.05%. The silanol content of the polymer was 1.48%. GPC molecular weight (THF, polystyrene standard): Mw = 233, Mn = 111. $^1H$ NMR (d8 - toluene): -0.16 - 0.34 (overlapping s, Si-Me), 3.48 (center of broad singlet, Si-OMe), 5.71 - 6.04 (broad m, Si-Vi), 6.71 - 7.91 (broad m, Si-Ph). The calculated Si-Ph/Si-Vi/Si-OMe/Si-Me ratio is 1.08/0.1/0.0/0.1. Found 1.2/1.0/1.2/1.4.

B. Polymer Pyrolysis and Char Composition Calculations

A blend of 4.286 g of the resin formed in part A, 0.754 g of $Ph_2Si(OSiMe_2H)_2$ and 0.181 g of Lupersol 101 was prepared. An aliquot of the blend was crosslinked at 250°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 27.5%. The elemental composition of the char was 59.4% carbon, 3.47% boron and 40.4% silicon. The following calculation was made based upon the carbon and boron analyses: 100 g of cured polymer gives 27.5 g of a ceramic char consisting of 37.13% (by difference) silicon, 59.4% carbon and 3.47% boron. The char consists of 14.59 g of SiC (53.0%) 0.94 g B (3.4%) and 15.0 g of excess C (53.6%). Therefore, every gram of polymer gives 0.146 g of SiC, 0.0094 g of B and 0.015 g of excess carbon.

C. Test Bar Fabrication and Testing

35.0 g of SiC powder was ultrasonically dispersed into a toluene solution of 3.72 g of the resin formed in part A., 0.65 g of $Ph_2Si(OSiMe_2H)_2$ and 0.212 g of Lupersol 101 (FCV = 0.155%, [B] = 0.097%). The solvent was removed in vacuo. The residue was ground and passed through a 90 micrometer sieve. The sieved powder was uniaxially pressed into 35 x 8 x 3 mm test bars at 324.3 MPa (47 ksi). The test bars were cured for 3 hours at 250°C in an argon atmosphere (room temperature to 250°C at 4°C/minute). The density of the cured test bars averaged 2.21 ± 0.02 g/cm$^3$ (n = 6). The average 4-pt MOR flexural strength of the cured test bars was 12.5 ± 2.6 MPa (1817 ± 378 psi). Aliquots of the cured test bars were fired to 2070°C using a temperature program of room temperature to 300°C at 2°C/minute, 300 - 1150°C at 5°C/minute, 1150 - 1575°C at 5°C/minute in a vacuum, a three hour hold at 1575°C in a vacuum, 1575 - 2070°C at 5°C/minute with a one hour hold at 2070°C. The samples were cooled from 2070 to 100°C at 3°C/minute. The density of the fired test bars averaged 3.11 ± 0.02 g/cm$^3$ (n = 8). The average 4-pt MOR flexural strength for machined test bars was 380.6 ± 35.9 MPa (55.2 ± 5.2 ksi).

<u>Example</u> <u>VII</u> - Preparation of Sintered Test Bars from $(Ph_2Si_{0.5})_{0.24}(PhSiO_{1.5})_{0.20}(BO_{1.5})_{0.36}(Me_2SiViO_{0.5})_{0.20}$

A. Polymer Synthesis

A mixture of 88.8 g (1.44 mole) of $B(OH)_3$, 74.4 g (0.40 mole) of $(Me_2SiVi)_20$, 234.4 g (0.96 mole) of $Ph_2Si(0Me)_2$, 158.6 g (0.80 mole) of $PhSi(OMe)_3$, 100 g of water and 0.41 ml of $CF_3S0_3H$ was refluxed for 17.5 hours. The methanol was then removed by distillation until the distillate temperature reached 90°C. The pot was cooled and diluted with 356 g of toluene. The distillation head was replaced with a Dean-Stark trap and the reaction refluxed for 16 hours. After cooling to room temperature, the reaction was neutralized with 7.1 g of $NaHCO_3$ and then quenched with 10 mL of $Me_2SiViCl$. The reaction was stirred for several hours at room temperature and then filtered through a 0.22 micrometer membrane filter. Concentration of the filtrate gave 283.8 g of a light yellow resin. $^1H$ NMR (d8 - toluene): -0.40 - 0.20 (overlapping s, Si-Me), 5.2 - 6.0 (broad m, Si-Vi), 6.4 - 7.7 (broad m, Si-Ph). The calculated Si-Ph/Si-Vi/Si-$Me_2$ ratio is 3.4/1.0/1.0. Found 3.88/1.06/1.0.

B. Polymer Pyrolysis and Char Composition Calculations

A blend of 4.08 g of the resin formed in part A, 0.78 g of $Ph_2Si(OSiMe_2H)_2$ and 0.18 g of Lupersol 101 was prepared. An aliquot of the blend was crosslinked at 250°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 29.4%. The elemental composition of the char was 52.5% carbon, 6.45% boron and 44.9% silicon. The following calculation was made based upon the carbon and boron analyses: 100 g of cured polymer gives 29.4 g of a ceramic char consisting of 41.1% (by difference) silicon, 52.5% carbon and 6.45% boron. The char consists of 17.24 g of SiC (58.6%), 1.88 g B (6.4%) and 10.22 g of excess C (34.8%). Therefore, every gram of polymer gives 0.172 g of SiC, 0.019 g of B and 0.102 g of excess carbon.

C. Test Bar Fabrication and Testing

35.2 g of SiC powder was ultrasonically dispersed into a toluene solution of 4.08 g of the resin formed in part A, 0.72 g of $Ph_2Si(OSiMe_2H)_2$ and 0.183 g of Lupersol 101 (FCV = 1.14%, [B] = 0.21%). The solvent was removed in vacuo. The residue was ground and passed through a 90 micrometer sieve. The sieved powder was uniaxially pressed into 35 x 8 x 3 mm test bars at 324.3 MPa (47 ksi). The test bars were cured for 2 hours at 250°C in an argon atmosphere (room temperature to 250°C at 3°C/minute). The density of the cured test bars averaged $2.23 \pm 0.02$ g/cm$^3$ (n = 6). The average 4-pt MOR flexural strength of the cured test bars was $18.1 \pm 2.1$ MPa ($2632 \pm 299$ psi). Aliquots of the cured test bars were fired to 2070°C using a temperature program of room temperature to 300°C at 2°C/minute, 300 - 1150°C at 5°C/minute, 1150 - 1575°C at 5°C/minute in a vacuum, a three hour hold at 1575°C in a vacuum, 1575 - 2070°C at 5°C/minute with a one hour hold at 2070°C. The samples were cooled from 2070 to 100°C at 3°C/minute. The density of the fired test bars averaged $3.10 \pm 0.01$ g/cm$^3$ (n = 12). The average 4-pt MOR flexural strength for machined test bars was $453.1 \pm 72.4$ MPa ($65.72 \pm 10.5$ ksi) (n = 24).

Example VIII - Example of Transfer Molding $(Ph_2Si_{0.5})_{0.15}(PhSiO_{1.5})_{0.30}(BO_{1.5})_{0.10}(MeSiViO)_{0.45}$

A. Polymer Synthesis

A mixture of 10.3 g (0.10 mole) of B(OMe)3, 38.7 g (0.45 equivalents) of $(MeViSiO)_n$, 36.6 g (0.15 mole) of $Ph_2Si(OMe)_2$, 59.5 g (0.30 mole) of $PhSi(OMe)_3$, 85 g of water and 0.50 mL of $CF_3SO_3H$ was refluxed for 4 hours. The reaction was then neutralized by addition of 1 g of $NaHCO_3$ and the methanol was removed by distillation until the distillate temperature reached 95°C. The pot was cooled and diluted with 100 g of toluene and 1 g of zinc octoate added. The distillation head was replaced with a Dean-Stark trap and the reaction refluxed for 24 hours. After cooling to room temperature, the reaction was quenched with 10 mL of $Me_2SiViCl$. The reaction was stirred for several hours at room temperature and then filtered through a 0.22 micrometer membrane filter. Concentration of the filtrate gave 86 g of 1 resin. GPC in THF showed a number average molecular weight of 475 and a weight average molecular weight of 1191.

B. Polymer Pyrolysis and Char Composition Calculations

A blend of 5.587 g of the resin formed in part A, 0.010 g of Lupersol 101 was prepared. An aliquot of the blend was crosslinked at 200°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 34.9%. The elemental composition of the char was 46.1% carbon, 1.76% boron and 50.5% silicon. The following calculation was made based upon the carbon and boron analyses: 100 g of cured polymer gives 34.9 g of a ceramic char consisting of 52.2% (by difference) silicon, 46.1% carbon and 1.8% boron. The char consists of 26.0 g of SiC (74.5%), 0.628 g B (1.8%) and 8.28 g of excess C (23.7%). Therefore, every gram of polymer gives 0.26 g of SiC, 0.0063 g of B and 0.0828 g of excess carbon.

C. Test Bar Fabrication and Testing

30.0 g of the resin formed in part A, 0.045 g of Lupersol 101 and 95 g SiC powder (added in four portions 50.0 g, 25.0 g, 15.0 g and 5.0 g) were mixed at 110°C in a Brabender plasticorder tester fitted with roller heads and a 60 mL bowl. The material was mixed for 45 minutes at speeds of 60 rpm and allowed to cool. The material was removed and molded employing a 12.5 ton Hull transfer molder at 180°C platen temperature and 6.9 MPa (1000 psig) transfer pressure. The material was molded into a 12 cavity H shaped mold in 5 minute cycles. The parts were removed after these cycles and were characterized by densities of 2.15 $g/cm^3$ and 4 point MOR strengths of 37.6 ± 6.9 MPa (5.45 ± 1.74 ksi). Aliquots of the molded bodies were fired to 2050°C using a temperature program of room temperature to 1200°C at 2.5°C/minute, 1200 - 1500°C at 2.5°C/minute in a vacuum, a two hour hold at 1500°C in a vacuum, 1500 - 2050°C at 2.5°C/minute with a four hour hold at 2050°C. The samples were cooled from 2070 to 100°C at 5°C/minute. The density of the sintered bodies averaged 2.96 ± 0.01 $g/cm^3$ (n = 12). The average 4-pt MOR flexural strength for the test bars was 304.8 ± 113.1 MPa (44.2 ± 16.4 ksi) (n = 12).

Example IX - Example of Transfer Molding $(Ph_2Si_{0.5})_{0.15}(PhSiO_{1.5})_{0.30}(BO_{1.5})_{0.10}(MeSiViO)_{0.30}(Me_2SiO)_{0.15}$

A. Polymer Synthesis

A mixture of 20.6 g (0.20 mole) of B(OMe)3, 51.6 g (0.60 equivalents) of $(MeViSiO)_n$, 22.2 g (0.30 equivalents) of $(Me_2SiO)_n$, 73.2 g (0.30 mole) of $Ph_2Si(OMe)_2$, 118-8 g (0.60 mole) of $PhSi(OMe)_3$, 170 g of water and 2.0 mL of $CF_3S0_3H$ was refluxed for 4 hours. The methanol was removed by distillation until the distillate temperature reached 95°C. The pot was cooled and diluted with 140 g of toluene added. The distillation head was replaced with a Dean-Stark trap and the reaction refluxed for 24 hours. After cooling to room temperature, the reaction was neutralized by addition of 1 g of $NaHC0_3$ and quenched with 10 mL of $Me_2SiViCl$. The reaction was stirred for several hours at room temperature and then filtered through a 0.22 micrometer membrane filter. Concentration of the filtrate gave 168 g of a resin.

B. Polymer Pyrolysis and Char Composition Calculations

A blend of 5.055 g of the resin formed in part A, 0.010 g of Lupersol 101 was prepared. An aliquot of the blend was crosslinked at 200°C for 2 hours in an argon atmosphere. An aliquot of the crosslinked polymer was weighed into a graphite crucible. The crucible was transferred into an Astro tube furnace. The furnace was evacuated to less than 2.7 kPa (20 torr) and then backfilled with argon. This procedure was repeated twice. Under a purge of argon, the sample was heated to 1900°C at approximately 15°C/minute and held at temperature for 2 hours before cooling to room temperature. The sample had a mass retention of 37.6%. The elemental composition of the char was 49.6% carbon, 1.96% boron and 46.6% silicon. The following calculation was made based upon the carbon and boron analyses: 100 g of cured polymer gives 37.6 g of a ceramic char consisting of 48.4% (by difference) silicon, 49.6% carbon and 1.96% boron. The char consists of 25.9 g of SiC (69.1%), 0.737 g B (1.9%) and 10.85 g of excess C (28.9%). Therefore, every gram of polymer gives 0.26 g of SiC, 0.0074 g of B and 0.108 g of excess carbon.

C. Test Bar Fabrication and Testing

30.0 g of the resin formed in part A, 0.045 g of Lupersol 101 and 90.0 g SiC (added in four portions 50.0 g, 20.0 g, 15.0 g and 5.0 g) were mixed at 110°C in a Brabender plasticorder tester fitted with roller heads and a 60 mL bowl. The material was mixed for 45 minutes at speeds of 60 rpm and allowed to cool. The material was removed and molded employing a 12.5 ton Hull transfer molder at 180°C platen temperature and 6.9 MPa (1000 psig) transfer pressure. The material was molded into a 12 cavity H shaped mold in 5 minute cycles. The parts were removed after these cycles and were characterized by densities of 2.15 $g/cm^3$ and 4 point MOR Strengths of 37.6 ± 12.0 MPa (5.45 ± 1.74 ksi). Aliquots of the molded bodies were fired to 2050°C using a temperature program of room temperature to 1200°C at 2.5°C/minute, 1200 - 1500°C at 2.5°C/minute in a vacuum, a two hour hold at 1500°C in a vacuum, 1500 - 2050°C at 2.5°C/minute with a four hour hold at 2050°C. The samples were cooled from 2070 to 100°C at 5°C/minute. The density of the sintered bodies averaged 2.89 ± 0.02 $g/cm^3$ (n = 12). The average 4-pt MOR flexural strength for the test bars was 342 ± 31 MPa (49.6 ± 4.5 ksi) (n = 12).

## Claims

1. A method of preparing a sintered body of silicon carbide with a density greater than 2.4 $g/cm^3$, said method comprising:

(a) blending to a uniform mixture components comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that: (i) the amount of boron in the mixture is 0.08-3 weight percent, based on the total weight of the silicon carbide powder and the char derived from the curable preceramic borosiloxane polymer, and (ii) the amount of free or excess carbon in the mixture which is derived from the borosiloxane polymer during pyrolysis, expressed as a weight percentage based on the total weight of the silicon carbide powder and the char derived from the curable preceramic borosiloxane polymer, is greater than 0.1 weight percent;

(b) forming the uniform mixture into a desired shape under pressure at a temperature below 500°C. to obtain a handleable green body; and

(c) sintering the handleable green body in an inert atmosphere at a temperature greater than 1900°C. to obtain said sintered body of silicon carbide with a density greater than 2.4 g/cm$^3$.

**2.** The method of claim 1 wherein a crosslinking agent for the borosiloxane polymer is additionally present in an amount efective to crosslink, said crosslinking agent being a polyfunctional siloxane with Si-H functional bonds.

**3.** A method of forming a handleable green body with a green strength of 3.45 MPa (500 psi) or above comprising:

(a) blending to a uniform mixture components comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that: (i) the amount of boron in the mixture is 0.08-3 weight percent, based on the total weight of the silicon carbide powder and the char derived from the preceramic borosiloxane polymer, and (ii) the amount of free or excess carbon in the mixture which is derived from the borosiloxane polymer during pyrolysis, expressed as a weight percentage based on the total weight of the silicon carbide powder and the char derived from the preceramic borosiloxane polymer, is greater than 0.1 weight percent; and

(b) forming said uniform mixture into a desired shape under pressure at a temperature below 500°C. to obtain said handleable green body with a green strength of 3.45 MPa (500 psi) or above.

**4.** The method of claim 3 wherein a crosslinking agent for the borosiloxane is additionally present in an amount effective to crosslink, said crosslinking agent being a polyfunctional siloxane with Si-H functional bonds.

**5.** A uniform mixture for producing a highly densified silicon carbide body comprising silicon carbide powder, a curable preceramic borosiloxane polymer convertible by pyrolysis in an inert atmosphere to a stable ceramic char, which does not significantly decrease in weight upon further exposure to said pyrolysis, and which contains at least 10 weight percent free or excess carbon, in a ceramic char yield greater than 20 weight percent, and a curing agent for the borosiloxane polymer, but excluding additional sintering aids, wherein the borosiloxane polymer contains units of the general structure [$R_3SiO_{0.5}$], [$R_2SiO$], [$RSiO_{1.5}$], [$BO_{1.5}$], [RBO], [$R_2BO_{0.5}$] and [$SiO_2$], where each R is independently selected from hydrogen, alkyl radicals containing 1 to 20 carbon atoms, phenyl radicals and vinyl radicals, wherein the curing agent is present in an effective amount to cure, and wherein the amount of the curable preceramic borosiloxane polymer is such that:

(i) the amount of boron in the mixture is 0.08-3 weight percent, based on the total weight of the silicon carbide powder and the char derived from the curable preceramic borosiloxane polymer, and (ii) the amount of free or excess carbon in the mixture which is derived from the borosiloxane polymer during pyrolysis, expressed as a

weight percentage based on the total weight of the silicon carbide powder and the char derived from the curable preceramic borosiloxane polymer, is greater than 0.1 weight percent.

6. The uniform mixture of claim 5, wherein a crosslinking agent for the borosiloxane is additionally present in an amount effective to crosslink, said crosslinking agent being a polyfunctional siloxane with Si-H functional bonds.

**Patentansprüche**

1. Verfahren zur Herstellung eines Sinterkörpers aus Siliciumcarbid mit einer Dichte von mehr als 2,4 g/cm$^3$, bei dem man:

   (a) Komponenten, welche Siliciumcarbidpulver, ein härtbares präkeramisches Borsiloxanpolymer, das durch Pyrolyse in einer inerten Atmosphäre in einer Ausbeute von mehr als 20 Gewichtsprozent in ein stabiles verkohltes keramisches Material umgewandelt werden kann, dessen Gewicht sich bei weiterer Pyrolyse nicht erheblich vermindert und das mindestens 10 Gewichtsprozent freien oder überschüssigen Kohlenstoff enthält, sowie einen Härter für das Borsiloxanpolymer umfassen, zu einer einheitlichen Mischung mischt, aber zusätzliche Sinterhilfsmittel ausschließt, wobei das Borsiloxanpolymer Einheiten der allgemeinen Struktur [$R_3SiO_{0,5}$], [$R_2SiO$], [$RSiO_{1,5}$], [$BO_{1,5}$], [RBO], [$R_2BO_{0,5}$] und [$SiO_2$] enthält, in der R jeweils unabhängig ausgewählt ist aus Wasserstoff, Alkylresten mit 1 bis 20 Kohlenstoffatomen, Phenylresten und Vinylresten, wobei der Härter in einer für die Härtung wirksamen Menge vorhanden ist und wobei die Menge des härtbaren präkeramischen Borsiloxanpolymeren so bemessen ist, daß: (i) die Menge des Bors in der Mischung 0,08 bis 3 Gewichtsprozent beträgt, bezogen auf das Gesamtgewicht des Siliciumcarbidpulvers und des verkohlten Materials aus dem härtbaren präkeramischen Borsiloxanpolymeren, und (ii) die Menge des freien oder überschüssigen Kohlenstoffs in der Mischung, der aus dem Borsiloxanpolymeren während der Pyrolyse entsteht, ausgedrückt in Gewichtsprozent, bezogen auf das Gesamtgewicht des Siliciumcarbidpulvers und des aus dem härtbaren präkeramischen Borsiloxanpolymeren stammenden verkohlten Materials, größer als 0,1 Gewichtsprozent ist;

   (b) die einheitliche Mischung unter Druck bei einer Temperatur unterhalb von 500°C in eine gewünschte Form bringt, um einen handhabbaren Grünkörper herzustellen; und

   (c) den handhabbaren Grünkörper in einer inerten Atmosphäre bei einer Temperatur von mehr als 1.900°C sintert, um den Sinterkörper aus Siliciumcarbid mit einer Dichte von mehr als 2,4 g/cm$^3$ zu erhalten.

2. Verfahren nach Anspruch 1, wobei zusätzlich ein polyfunktionales Siloxan mit Si-H-funktionalen Bindungen als Vernetzungsmittel für das Borsiloxanpolymer in einer für die Vernetzung wirksamen Menge vorhanden ist.

3. Verfahren zur Herstellung eines handhabbaren Grünkörpers mit einer Grünstärke von 3,45 MPa (500 psi) oder mehr, wobei man:

   (a) Komponenten, welche Siliciumcarbidpulver, ein härtbares präkeramisches Borsiloxanpolymer, das durch Pyrolyse in einer inerten Atmosphäre in einer Ausbeute von mehr als 20 Gewichtsprozent in ein stabiles verkohltes keramisches Material umgewandelt werden kann, dessen Gewicht sich bei weiterer Pyrolyse nicht erheblich vermindert und das mindestens 10 Gewichtsprozent freien oder überschüssigen Kohlenstoff enthält, sowie einen Härter für das Borsiloxanpolymer umfassen, zu einer einheitlichen Mischung mischt, aber zusätzliche Sinterhilfsmittel ausschließt, wobei das Borsiloxanpolymer Einheiten der allgemeinen Strukturen [$R_3SiO_{0,5}$], [$R_2SiO$], [$RSiO_{1,5}$], [$BO_{1,5}$], [RBO], [$R_2BO_{0,5}$] und [$SiO_2$] enthält, in denen R jeweils unabhängig ausgewählt ist aus Wasserstoff, Alkylresten mit 1 bis 20 Kohlenstoffatomen, Phenylresten und Vinylresten, wobei der Härter in einer für die Härtung wirksamen Menge vorhanden ist und wobei die Menge des härtbaren präkeramischen Borsiloxanpolymeren so bemessen ist, daß: (i) die Menge des Bors in der Mischung 0,08 bis 3 Gewichtsprozent beträgt, bezogen auf das Gesamtgewicht des Siliciumcarbidpulvers und des verkohlten Materials aus dem härtbaren präkeramischen Borsiloxanpolymeren, und (ii) die Menge des freien oder überschüssigen Kohlenstoffs in der Mischung, der aus dem Borsiloxanpolymeren während der Pyrolyse entsteht, ausgedrückt in Gewichtsprozent, bezogen auf das Gesamtgewicht des Siliciumcarbidpulvers und des aus dem präkeramischen Borsiloxanpolymeren stammenden verkohlten Materials, größer als 0,1 Gewichtsprozent ist;

   (b) die einheitliche Mischung unter Druck bei einer Temperatur unterhalb von 500°C in eine gewünschte Form bringt, um einen handhabbaren Grünkörper mit einer Grünstärke von 3,45 MPa (500 psi) oder mehr herzustellen.

4. Verfahren nach Anspruch 3, wobei zusätzlich ein polyfunktionales Siloxan mit Si-H-funktionalen Bindungen als Vernetzungsmittel für das Borsiloxanpolymer in einer für die Vernetzung wirksamen Menge vorhanden ist.

5. Einheitliche Mischung zur Herstellung eines hochverdichteten Körpers aus Siliciumcarbid, enthaltend Siliciumcarbidpulver, ein härtbares präkeramisches Borsiloxanpolymer, das durch Pyrolyse in einer inerten Atmosphäre in einer Ausbeute von mehr als 20 Gewichtsprozent in ein stabiles verkohltes keramisches Material umgewandelt werden kann, dessen Gewicht sich bei weiterer Pyrolyse nicht erheblich vermindert und das mindestens 10 Gewichtsprozent freien oder überschüssigen Kohlenstoff enthält, sowie einen Härter für das Borsiloxanpolymer, aber keine zusätzlichen Sinterhilfsmittel, wobei das Borsiloxanpolymer Einheiten der allgemeinen Strukturen [$R_3SiO_{0,5}$], [$R_2SiO$], [$RSiO_{1,5}$], [$BO_{1,5}$], [RBO], [$R_2$.$BO_{0,5}$] und [$SiO_2$] enthält, in denen R jeweils unabhängig ausgewählt ist aus Wasserstoff, Alkylresten mit 1 bis 20 Kohlenstoffatomen, Phenylresten und Vinylresten, wobei der Härter in einer für die Härtung wirksamen Menge vorhanden ist und wobei die Menge des härtbaren präkeramischen Borsiloxanpolymeren so bemessen ist, daß:

(i) die Menge des Bors in der Mischung 0,08 bis 3 Gewichtsprozent beträgt, bezogen auf das Gesamtgewicht des Siliciumcarbidpulvers und des verkohlten Materials aus dem härtbaren präkeramischen Borsiloxanpolymeren, und (ii) die Menge des freien oder überschüssigen Kohlenstoffs in der Mischung, der aus dem Borsiloxanpolymeren während der Pyrolyse entsteht, ausgedrückt in Gewichtsprozent, bezogen auf das Gesamtgewicht des Siliciumcarbidpulvers und des aus dem härtbaren präkeramischen Borsiloxanpolymeren stammenden verkohlten Materials, größer als 0,1 Gewichtsprozent ist.

6. Einheitliche Mischung nach Anspruch 5, wobei zusätzlich ein polyfunktionales Siloxan mit Si-H-funktionalen Bindungen als Vernetzungsmittel für das Borsiloxanpolymer in einer für die Vernetzung wirksamen Menge vorhanden ist.

## Revendications

1. Un procédé de fabrication d'un corps fritté en carbure de silicium ayant une masse volumique supérieure à 2,4 g/$cm^3$, ledit procédé consistant à :

(a) mélanger en un mélange homogène des composants comprenant une poudre de carbure de silicium, un polymère de borosiloxane précéramique durcissable convertible par pyrolyse dans une atmosphère inerte en un produit de carbonisation céramique stable, dont le poids de diminue pas appréciablement par une exposition supplémentaire à ladite pyrolyse et qui contient au moins 10 pour cent en poids de carbone libre ou en excès, avec un rendement en produit de carbonisation céramique supérieur à 20 pour cent en poids, et un agent durcisseur pour le polymère de borosiloxane, mais à l'exclusion d'autres adjuvants de frittage, le polymère de borosiloxane contenant des motifs de la structure générale [$R_3SiO_{0,5}$], [$R_2SiO$], [$RSiO_{1,5}$], [$BO_{1,5}$], [RBO], [$R_2BO_{0,5}$] et [$SiO_2$], où chaque R est choisi indépendamment parmi l'hydrogène, les radicaux alkyles contenant 1 à 20 atomes de carbone, les radicaux phényle et les radicaux vinyle, l'agent durcisseur étant présent en une quantité efficace pour effectuer un durcissement, et la quantité du polymère de borosiloxane précéramique durcissable étant telle que : (i) la quantité de bore dans le mélange soit de 0,08 à 3 pour cent en poids, par rapport au poids total de la poudre de carbure de silicium et du produit de carbonisation dérivé du polymère de borosiloxane précéramique durcissable, et (ii) la quantité de carbone libre ou en excès dans le mélange, qui est engendré par le polymère de borosiloxane pendant la pyrolyse, exprimée en pourcentage en poids par rapport au poids total de la poudre de carbure de silicium et du produit de carbonisation dérivé du polymère de borosiloxane précéramique durcissable, soit supérieure à 0,1 pour cent en poids ;
(b) façonner le mélange homogène en une forme désirée sous pression à une température inférieure à 500°C pour obtenir un corps vert pouvant être manipulé ; et
(c) fritter le corps vert pouvant être manipulé dans une atmosphère inerte à une température supérieure à 1900°C pour obtenir ledit corps fritté en carbure de silicium ayant une masse volumique supérieure à 2,4 g/$cm^3$.

2. Le procédé de la revendication 1, dans lequel un agent de réticulation pour le polymère de borosiloxane est de plus présent en une quantité efficace pour effectuer une réticulation, ledit agent de réticulation étant un siloxane polyfonctionnel ayant des liaisons fonctionnelles Si-H.

3. Un procédé de formation d'un corps vert pouvant être manipulé ayant une résistance mécanique à l'état vert de 3,45 MPa ou plus, consistant à :

(a) mélanger en un mélange homogène des composants comprenant une poudre de carbure de silicium, un polymère de borosiloxane précéramique durcissable convertible par pyrolyse dans une atmosphère inerte en un produit de carbonisation céramique stable, dont le poids de diminue pas appréciablement par une exposition supplémentaire à ladite pyrolyse et qui contient au moins 10 pour cent en poids de carbone libre ou en excès, avec un rendement en produit de carbonisation céramique supérieur à 20 pour cent en poids, et un agent durcisseur pour le polymère de borosiloxane, mais à l'exclusion d'autres adjuvants de frittage, le polymère de borosiloxane contenant des motifs de la structure générale [$R_3SiO_{0,5}$], [$R_2SiO$], [$RSiO_{1,5}$], [$BO_{1,5}$], [RBO], [$R_2BO_{0,5}$] et [$SiO_2$], où chaque R est choisi indépendamment parmi l'hydrogène, les radicaux alkyles contenant 1 à 20 atomes de carbone, les radicaux phényle et les radicaux vinyle, l'agent durcisseur étant présent en une quantité efficace pour effectuer un durcissement, et la quantité du polymère de borosiloxane précéramique durcissable étant telle que : (i) la quantité de bore dans le mélange soit de 0,08 à 3 pour cent en poids, par rapport au poids total de la poudre de carbure de silicium et du produit de carbonisation dérivé du polymère de borosiloxane précéramique durcissable, et (ii) la quantité de carbone libre ou en excès dans le mélange, qui est engendré par le polymère de borosiloxane pendant la pyrolyse, exprimée en pourcentage en poids par rapport au poids total de la poudre de carbure de silicium et du produit de carbonisation dérivé du polymère de borosiloxane précéramique, soit supérieure à 0,1 pour cent en poids ; et

(b) façonner ledit mélange homogène en une forme désirée sous pression à une température inférieure à 500°C pour obtenir un corps vert pouvant être manipulé ayant une résistance mécanique à l'état vert de 3,45 MPa ou plus.

**4.** Le procédé de la revendication 3, dans lequel un agent de réticulation pour le borosiloxane est de plus présent en une quantité efficace pour effectuer une réticulation, ledit agent de réticulation étant un siloxane polyfonctionnel ayant des liaisons fonctionnelles Si-H.

**5.** Un mélange homogène pour la production d'un corps en carbure de silicium hautement densifié, comprenant une poudre de carbure de silicium, un polymère de borosiloxane précéramique durcissable convertible par pyrolyse dans une atmosphère inerte en un produit de carbonisation céramique stable, dont le poids de diminue pas appréciablement par une exposition supplémentaire à ladite pyrolyse et qui contient au moins 10 pour cent en poids de carbone libre ou en excès, avec un rendement en produit de carbonisation céramique supérieur à 20 pour cent en poids, et un agent durcisseur pour le polymère de borosiloxane, mais à l'exclusion d'autres adjuvants de frittage, le polymère de borosiloxane contenant des motifs de la structure générale [$R_3SiO_{0,5}$], [$R_2SiO$], [$RSiO_{1,5}$], [$BO_{1,5}$], [RBO], [$R_2BO_{0,5}$] et [$SiO_2$], où chaque R est choisi indépendamment parmi l'hydrogène, les radicaux alkyles contenant 1 à 20 atomes de carbone, les radicaux phényle et les radicaux vinyle, l'agent durcisseur étant présent en une quantité efficace pour effectuer un durcissement, et la quantité du polymère de borosiloxane précéramique durcissable étant telle que :

(i) la quantité de bore dans le mélange soit de 0,08 à 3 pour cent en poids, par rapport au poids total de la poudre de carbure de silicium et du produit de carbonisation dérivé du polymère de borosiloxane précéramique durcissable, et
(ii) la quantité de carbone libre ou en excès dans le mélange, qui est engendré par le polymère de borosiloxane pendant la pyrolyse, exprimée en pourcentage en poids par rapport au poids total de la poudre de carbure de silicium et du produit de carbonisation dérivé du polymère de borosiloxane précéramique durcissable, soit supérieure à 0,1 pour cent en poids.

**6.** Le mélange homogène de la revendication 5, dans lequel un agent de réticulation pour le borosiloxane est de plus présent en une quantité efficace pour effectuer une réticulation, ledit agent de réticulation étant un siloxane polyfonctionnel ayant des liaisons fonctionnelles Si-H.